(19) Europäisches Patentamt
European Patent Office
Office européen des brevets

(11) Veröffentlichungsnummer: **0 015 028**
**B1**

(12) # EUROPÄISCHE PATENTSCHRIFT

(45) Veröffentlichungstag der Patentschrift: **02.02.83**

(51) Int. Cl.³: **C 08 F 8/00**, C 08 F 222/06, D 21 H 3/38

(21) Anmeldenummer: **80200119.8**

(22) Anmeldetag: **13.02.80**

(54) **Hydroxylgruppenhaltige Copolymerisate, Verfahren zu ihrer Herstellung und ihre Verwendung als Papierleimungsmittel.**

(30) Priorität: **15.02.79 DE 2905764**

(43) Veröffentlichungstag der Anmeldung: **03.09.80 Patentblatt 80/18**

(45) Bekanntmachung des Hinweises auf die Patenterteilung: **02.02.83 Patentblatt 83/5**

(84) Benannte Vertragsstaaten: **BE CH DE FR GB IT LU NL SE**

(56) Entgegenhaltungen:
**US-A-3 532 672**
**Chemical Abstracts, Band 88, 1978, Seite 563, Nr. 152130x Columbus, Ohio, U.S.A.**

(73) Patentinhaber: **CHEMISCHE WERKE HÜLS AG, Postfach 1320, D-4370 Marl 1 (DE)**

(72) Erfinder: **Schülde, Felix, Dr., Am Gecksbach 20, D-4273 Wulfen (DE)**
Erfinder: **Peterlein, Karl, Dr., Vehrenbergstrasse 133, D-4390 Gladbeck (DE)**
Erfinder: **Diedrich, Klaus, Dr., Vehrenbergstrasse 109, D-4390 Gladbeck (DE)**

(74) Vertreter: **Steil, Hanna, Dipl.-Chem. et al, RSP PATENTE - PB 15 Postfach 1320, D-4370 Marl 1 (DE)**

**EP 0 015 028 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Hydroxylgruppenhaltige Copolymerisate, Verfahren zu ihrer Herstellung und ihre Verwendung als Papierleimungsmittel

*Beschreibung und Beispiele*

Die Erfindung betrifft hydroxylgruppenhaltige Copolymerisate auf der Basis von Dicyclopentadien und Maleinsäureanhydrid, ein Verfahren zu ihrer Herstellung sowie ihre Verwendung als Papieroberflächenleimungsmittel.

In US-PS Nr. 3188303 werden Produkte beschrieben, die bei der Umsetzung von α, β-ungesättigten Di- oder Tricarbonsäuren, insbesondere Maleinsäureanhydrid, mit Dicyclopentadien bei Temperaturen unter 115°C in Gegenwart von Radikalstartern in einem inerten Lösungsmittel entstehen. Die Temperatur wird auf etwa 115°C begrenzt, um eine Dedimerisation von Dicyclopentadien in Cyclopentadien mit einer nachfolgenden Diels-Alder-Reaktion zwischen Cyclopentadien und Maleinsäureanhydrid zu vermeiden. Als Lösungsmittel können aromatische bzw. aliphatische Kohlenwasserstoffe, wie z.B. Benzol, Toluol, Xylol, Hexan, Heptan oder überschüssiges Dicyclopentadien eingesetzt werden. Ausser diesen Lösungsmitteln können auch Äther, wie Dioxan, oder Ketone benutzt werden, allerdings muss daraus das Reaktionsprodukt mit einem Kohlenwasserstoff ausgefällt werden.

Als Radikalstarter kommen Verbindungen aus der Gruppe der organischen Peroxide, Hydroperoxide, Oxime, Nitrile, azoaromatischen und diazoaromatischen Verbindungen in Frage, sofern sie unterhalb der vorgegebenen Reaktionstemperatur eine genügend hohe Zerfallsgeschwindigkeit aufweisen, um die Reaktion zu starten und in Gang zu halten.

Als bevorzugte Radikalstarter werden Azobisisobutyronitril, Laurylperoxid, Benzoylperoxid, 1-Azocyclohexancarbonitril sowie t-Butylperbenzoat genannt.

Die durch die Reaktion entstehenden Produkte stellen spröde Pulver dar, die bis zu einer Temperatur von 300°C nicht schmelzen, sondern sich oberhalb dieses Wertes zu zersetzen beginnen. Damit unterscheiden sie sich deutlich von Produkten, die durch eine Diels-Alder-Reaktion zwischen Cyclopentadien und Maleinsäureanhydrid entstanden sind und die in einem Bereich zwischen 30°C und deutlich unterhalb 300°C schmelzen.

Des weiteren wird in der DE-OS Nr. 2727510 die Verwendung von wasserlöslichen Ammoniumsalzen solcher Copolymerisate aus Dicyclopentadien und Maleinsäureanhydrid als Mittel zur Papierleimung beschrieben. Die Verwendung von solchen synthetischen Papierleimen für die Oberflächenleimung ermöglicht eine Applikation ohne Zusatz von Metallsalzen. Die dort angeführten Copolymerisate haben gegenüber anderen Copolymerisaten aus ungesättigten Carbonsäuren und äthylenisch ungesättigten Verbindungen, die als Papierleimungsmittel eingesetzt werden, den Vorteil aufzuweisen, dass sie direkt als Copolymerisat bzw. als Salz des Copolymeren verwendet werden können und nicht erst in Derivate, wie z.B. Halbamide, Imide, Halbester usw., überführt werden müssen. Darüber hinaus sind die erzielten Leimungswerte sehr gut. Nachteilig an diesen in der DE-OS Nr. 2727510 erwähnten Copolymerisaten aus Dicyclopentadien und Maleinsäureanhydrid ist ihre Schwerlöslichkeit in Alkalilaugen (unter 0,5%). Sie müssen daher in wässerigen Ammoniaklösungen gelöst werden. Dadurch werden ihre Einsatzmöglichkeiten eingeschränkt, wenn aus arbeitstechnischen bzw. physiologischen Gründen auf die Verwendung von Ammoniak verzichtet werden muss.

In der vorliegenden Erfindung werden hydroxylgruppenhaltige Copolymerisate auf der Basis von Dicyclopentadien und Maleinsäureanhydrid sowie ein Verfahren zu ihrer Herstellung beschrieben, die als Papieroberflächen-Leimungsmittel eingesetzt werden können, und die die oben beschriebenen Nachteile nicht aufweisen.

Die erfindungsgemässen hydroxylgruppenhaltigen Copolymerisate erhält man dadurch, dass man an Copolymere aus Maleinsäureanhydrid und Dicyclopentadien Wasser anlagert. Es wurde nun überraschenderweise gefunden, dass die Wasseranlagerung zum weitaus überwiegenden Teil an der im Dicyclopentadienylrest des Copolymeren vorhandenen Doppelbindung, stattfindet, und nur ein ganz geringer Teil der Anhydridgruppen verseift wird.

Gegenstand der Erfindung sind daher hydroxylgruppenhaltige Copolymerisate aus Maleinsäureanhydrid und Dicyclopentadien der allgemeinen Formel:

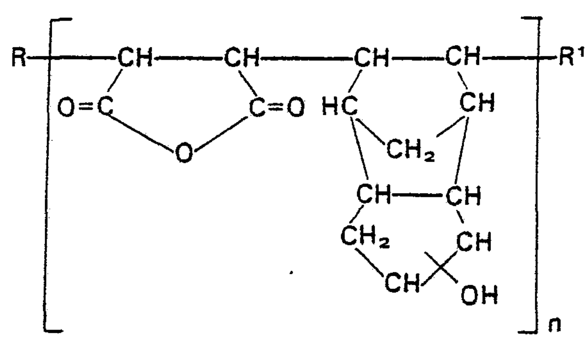

wobei R und $R^1$ gleich oder verschieden sein können und H, $C_1$ bis $C_{14}$-Alkyl/Isobutyronitril, gegebenenfalls halogensubstituiertes Phenyl-, $C_1$ bis $C_8$ alkylsubstituiertes Phenyl-, $C_1$ bis $C_{14}$-Alkoxy-, $C_1$ bis $C_{14}$-Acycloxy- oder gegebenenfalls halogensubstituiertes Benzoyl- und n = 3-10 bedeuten.

Gegenstand der Erfindung ist ausserdem ein Verfahren zur Herstellung der hydroxylgruppenhaltigen Copolymerisate aus Maleinsäureanhydrid und Dicyclopentadien, nach dem Anspruch 1, dadurch gekennzeichnet, dass ein bei Temperaturen unter 115°C in Gegenwart von Radikalstartern in inerten Lösungsmitteln hergestelltes Copolymerisat aus Maleinsäureanhydrid und Dicyclopentadien mit überschüssigem Wasser oder mit wässeriger Schwefelsäure 1-10 h bei Temperaturen von 70-110°C umgesetzt wird, wobei sich das Wasser überwiegend an die Doppelbindung des Dicyclopentadienylrestes anlagert.

Gegenstand der Erfindung ist weiterhin die Verwendung der hydroxylgruppenhaltigen Copolymerisate aus Maleinsäureanhydrid und Dicyclopentadien nach dem Anspruch 1 als anionische Papieroberflächenleimungsmittel.

Die Endgruppen R und R[1] stammen entweder aus den bei der Herstellung der Copolymerisate aus Dicyclopentadien und Maleinsäure verwendeten Lösungsmitteln, wie z.B. Benzol, Toluol, Xylol, Heptan oder Hexan, oder es handelt sich um Spaltprodukte der im einzelnen verwendeten Initiatoren, wie Benzoylperoxid, Azobisisobutyronitril, Laurylperoxid, t-Butylperbenzoat oder Diisopropylperoxidicarbonat.

Zur Anlagerung von Wasser an die Doppelbindung des Dicyclopentadienylrestes werden die Ausgangscopolymerisate, die ein mittleres Molgewicht von etwa 700 bis 2500 aufweisen, einige Zeit in 25%iger wässeriger Schwefelsäure oder im Überschuss von Wasser erhitzt. Die Wasseranlagerung in $H_2SO_4$ ist schneller abgeschlossen als in reinem Wasser, grundsätzlich ist ein Ansäuern jedoch nicht nötig. Im Verlauf der Reaktion werden die im Ausgangscopolymerisat vorhandenen Bernsteinsäureanhydridgruppen nur zu einem geringen Teil zu Carboxylgruppen verseift, zum weitaus überwiegenden Teil wird das Wasser an die im Dicyclopentadienylrest vorhandene Doppelbindung angelagert, wie aus den Infrarotspektren der ausgangs- bzw. der erfindungsgemässen Copolymerisate entnommen werden kann. In den IR-Spektren der Ausgangscopolymerisate findet man bei 3040 $cm^{-1}$, 1630 $cm^{-1}$ und 740 $cm^{-1}$ Banden der Doppelbindung des Dicyclopentadienylrestes; im Bereich zwischen 1650 und 1900 $cm^{-1}$ findet man nur zwei starke Banden bei 1860 und 1780 $cm^{-1}$ für die Anhydridgruppen. In den IR-Spektren der erfindungsgemässen Copolymerisate sind die Doppelbindungsbanden nicht mehr vorhanden, die Banden für die Anhydridgruppen sind geblieben, und darüber hinaus findet man bei 3450 $cm^{-1}$ und 1720 $cm^{-1}$ zwei Banden für Carboxylgruppen, die bei der Hydrolyse einiger Anhydridgruppen entstanden sind. Aus der Intensität dieser Banden kann man entnehmen, dass weniger als 10% der Anhydridgruppen hydrolysiert worden sind.

Um die erfindungsgemässen Copolymerisate, die Anhydridgruppen enthalten, wasserlöslich zu machen, überführt man sie mit Basen in ihre Salze. Dabei brauchen jedoch erfahrungsgemäss nicht alle Carboxylgruppen neutralisiert zu werden, da im allgemeinen ein Neutralisationsgrad von 80% — bezogen auf die Anzahl aller Carboxylgruppen — ausreicht. Als Kationen kommen vor allem Alkaliionen, wie Natrium und Kalium, sowie Ammonium und/oder Mono-, Di- oder Trialkylammonium mit insgesamt bis zu 6 Kohlenstoffatomen in Betracht. Darüber hinaus kann man die erfindungsgemässen Copolymerisate in Form ihrer Umsetzungsprodukte mit Ammoniak oder primären aliphatischen oder aromatischen Aminen, wie z.B. Äthylamin oder Anilin, oder sekundären Aminen, wie z.B. Diäthylamin, Morpholin oder Pyridin, zu den entsprechenden Halbamiden verwenden. Diese Umsetzungsprodukte besitzen ebenfalls ausgezeichnete Eigenschaften als Papieroberflächenleime.

Die für die Papierleimung benötigte Menge der erfindungsgemässen Copolymerisate liegt zwischen 0,01 und 3, vorzugsweise zwischen 0,1 und 1 Gewichtsprozent, bezogen auf das Papiergewicht.

Die als Papierleimungsmittel im Sinne der Erfindung eingesetzten Copolymerisate können mit für die Papierleimung gebräuchlichen anionischen Stärken kombiniert werden. Die so erhaltenen Leimflotten können erforderlichenfalls mit den üblichen Zusätzen versetzt werden. Die Verarbeitung kann nach den in der Papierherstellung üblichen Technologien erfolgen.

*Beispiel 1*

100 g Copolymerisat aus Maleinsäureanhydrid und Dicyclopentadien werden in 400 g 25%iger wässeriger Schwefelsäure 3 h lang unter Rückfluss erhitzt. Anschliessend wird das Copolymerisat abfiltriert, gründlich mit Wasser gewaschen und getrocknet. Das gewonnene Pulver hat einen Erweichungspunkt von über 300°C. Aus diesem Produkt lassen sich mit Alkalilauge 20-25%ige Lösungen herstellen.

*Beispiel 2*

100 g Copolymerisat aus Maleinsäureanhydrid und Dicyclopentadien werden in 400 g Wasser 8 h lang unter Rückfluss erhitzt. Anschliessend wird das Copolymerisat abfiltriert und getrocknet. Das gewonnene weisse Pulver hat einen Erweichungspunkt von über 300°C. Mit Alkalilauge lassen sich aus diesem Produkt 20-25%ige Lösungen herstellen.

*Beispiel 3*

Das nach einem der Beispiel 1 oder 2 hergestellte Copolymerisat wird in Aceton gelöst. Zur Umsetzung zum Halbamid wird in die erhaltene Lösung Ammoniak eingeleitet. Während der Umsetzung fällt das Halbamid als weisses Pulver aus. Nach dem Trocknen liegt sein Erweichungspunkt über 300°C.

Die nach den Beispielen 1, 2 und 3 erhaltenen Copolymerisate sowie zum Vergleich ein nicht weiter behandeltes Copolymerisat (4) aus Maleinsäureanhydrid und Dicyclopentadien werden mit einer oxidierten Maisstärke zu 10%igen Leimflotten kombiniert. Die Copolymerisate werden zu diesem Zweck in wässeriger Ammoniaklösung gelöst (= Leimungsmittel Ia, IIa, IIIa, und IVa). Darüber hinaus werden die nach Beispielen 1 und 2 erhaltenen Copolymerisate in Natronlauge gelöst und zu 10%igen Leimflotten verarbeitet (= Leimungsmittel Ib, IIb). Das unbehandelte Vergleichscopolymerisat aus Dicyclopentadien und Maleinsäureanhydrid löst sich nur zu etwa 0,3% in

Natronlauge und kann daher unter Verwendung von NaOH nicht zu einer Leimflotte verarbeitet werden. Das Festkörperverhältnis von Leimungsmittel zu Stärke beträgt 1,5:8,5. Diese Leimflotten, mit einem pH-Wert von ca. 9 (Leimungsmittel Ia-IVa) bzw. ca. 11 (Leimungsmittel Ib, IIb), werden auf einer Laborleimpresse auf eine ungeleimtes holzfreies 80-g-Papier so appliziert, dass die aufgebrachte Menge an Leimungsmittel (als Festprodukt) 0,6% des Papiergewichtes beträgt. Die erzielten Papiereigenschaften des trockenen Papiers enthält Tabelle 1.

Tabelle 1

| Leimungsmittel | Ia | Ib | IIa | IIb | IIIa | IVa | ohne |
|---|---|---|---|---|---|---|---|
| Wasseraufnahme DIN 53 132 s/g/m² | 10/12 | 10/17 | 10/13 | 10/17 | 10/12 | 10/16 | 1/89 |
| Leimungsgrad DIN 53 145 sec | 1800 | 1800 | 1800 | 1800 | 1800 | 1800 | 1 |
| Saughöhe, 10 min DIN 53 106 mm | 1-2 | 2-3 | 2-4 | 2-3 | 2-3 | 3-4 | 44 |
| Rupffestigkeit Dennison-Test | 20 | 20-18 | 20-18 | 20-18 | 20 | 18 | 11 |

Analog den vorstehenden Beispielen werden die Leimungsmittel I-IV zu Leimflotten formuliert und auf einer Laborleimpresse appliziert, mit dem Unterschied, dass ein mit 0,4% Harzleim in der Masse vorgeleimtes Papier verwendet wird. Die erzielten Papiereigenschaften enthält Tabelle 2.

Tabelle 2

| Leimungsmittel | Ia | Ib | IIa | IIb | IIIa | IVa | ohne |
|---|---|---|---|---|---|---|---|
| Wasseraufnahme DIN 53 132 s/g/m² | 60/11 | 60/14 | 60/14 | 60/14 | 60/12 | 60/12 | 60/27 |
| Leimungsgrad DIN 53 145 sec | 1800 | 1800 | 1800 | 1800 | 1800 | 1800 | 418 |
| Saughöhe, 10 min DIN 53 106 mm | 1-2 | 1-2 | 1-2 | 1-2 | 1-2 | 1-2 | 1-2 |
| Rupffestigkeit Dennison-Test | 20 | 20 | 20 | 20 | 20 | 18 | 13 |

Die Wirksamkeit der erfindungsgemässen Copolymerisate als Leimungsmittel ist deutlich sichtbar.

## Patentansprüche

1. Hydroxylgruppenhaltige Copolymerisate aus Maleinsäureanhydrid und Dicyclopentadien der allgemeinen Formel:

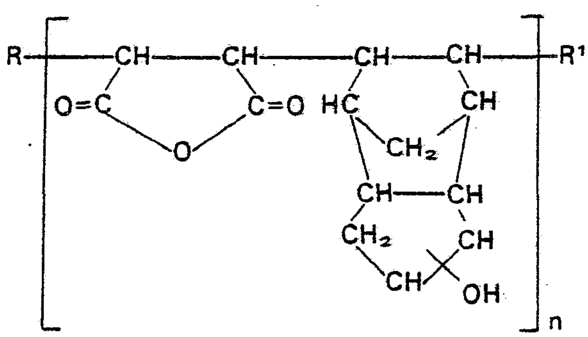

wobei R und $R^1$ gleich oder verschieden sein können und H, $C_1$ bis $C_{14}$-Alkyl/Isobutyronitril, gegebenenfalls halogensubstituiertes Phenyl-, $C_1$ bis $C_8$ alkylsubstituiertes Phenyl-, $C_1$ bis $C_{14}$-Alkoxy-, $C_1$ bis $C_{14}$-Acyloxy- oder gegebenenfalls halogensubstituiertes Benzoyl- und n = 3-10 bedeuten.

2. Verfahren zur Herstellung der hydroxylgruppenhaltigen Copolymerisate aus Maleinsäureanhydrid und Dicyclopentadien, nach dem Anspruch 1, dadurch gekennzeichnet, dass ein bei Temperaturen unter 115° C in Gegenwart von Radikalstartern in inerten Lösungsmitteln hergestelltes Copolymerisat aus Maleinsäureanhydrid und Dicyclopentadien mit überschüssigem Wasser oder mit wässeriger Schwefelsäure 1-10 h bei Temperaturen von 70-110° C umgesetzt wird, wobei sich das Wasser überwiegend an die Doppelbindung des Dicyclopentadienylrestes anlagert.

3. Verwendung der hydroxylhaltigen Copolymerisate aus Maleinsäureanhydrid und Dicyclopentadien nach dem Anspruch 1 als anionische Papieroberflächen-Leimungsmittel.

## Claims

1. Copolymers containing hydroxyl groups from maleic anhydride and dicyclopentadiene, of the general formula:

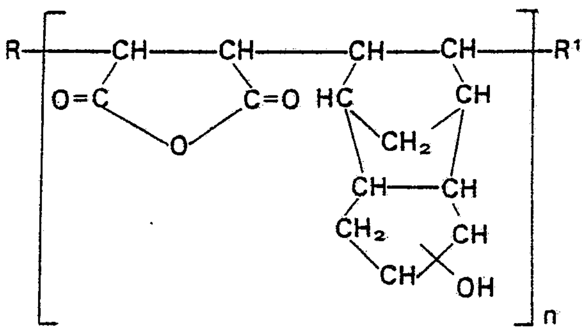

wherein R and $R^1$ may be the same or different, selected from the group of H, $C_1$-$C_{14}$ alkylisobutyronitrile, phenyl optionally substituted by halogen, $C_1$-$C_8$ alkyl-substituted phenyl, $C_1$-$C_{14}$ alkoxy-, $C_1$-$C_{14}$ acyloxy- or halogen-substituted benzoyl, and n = 3 to 10.

2. Process for the production of the copolymers containing hydroxyl groups made from maleic anhydride and dicyclopentadiene as claimed in claim 1, characterized in that a copolymer of maleic anhydride and dicyclopentadiene produced at temperatures below 115°C in the presence of radical initiators in inert solvents is transformed together with excess water or with an aqueous solution of sulphuric acid for 1 to 10 h, at temperatures of 70 to 110°C, wherein the water preponderantly attaches to the double bond of the dicyclopentadiene radical.

3. Use of copolymers containing hydroxyl groups from maleic anhydride and dicyclopentadiene as claimed in Claim 1 as anionic sizing agents to be applied to the surface of paper.

## Revendications

1. Copolymères d'anhydride maléique et de dicyclopentadiène contenant des groupes hydroxyles, caractérisés par la formule générale:

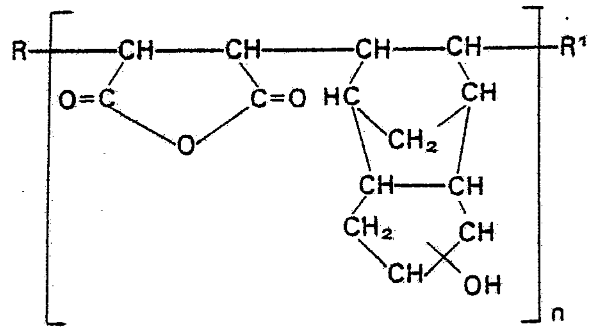

dans laquelle R et $R^1$ sont identiques ou différents et représentent un H, un alcoylisobutyronitrile en $C_1$-$C_{14}$, éventuellement un phényle halogéné, un phényle alcoylé en $C_1$-$C_8$, un alcoxy en $C_1$-$C_{14}$, un acyloxy en $C_1$-$C_{14}$ ou, éventuellement, un benzoyle halogéné, avec n = 3 à 10.

2. Procédé de fabrication des copolymères d'anhydride maléique et de dicyclopentadiène contenant des groupes hydroxyles selon la revendication 1, caractérisé en ce qu'un copolymère d'anhydride maléique et de dicyclopentadiène, préparé à une température inférieure à 115°C en présence d'un initiateur radicalaire dans un solvant inerte, réagit avec de l'eau en excès ou de l'acide sulfurique aqueux pendant 1 à 10 h à une température de 70 à 110°C, l'eau se fixant de façon prédominante sur la double liaison du reste dicyclopentadiényle.

3. Application des copolymères d'anhydride maléique et de dicyclopentadiène, contenant des groupes hydroxyles, selon la revendication 1 comme colles à papier anioniques pour collage en surface.